# EUROPÄISCHE PATENTSCHRIFT

(11) **EP 1 745 917 B1**
(45) Veröffentlichungstag und Bekanntmachung des Hinweises auf die Patenterteilung: **06.03.2013**
(21) Anmeldenummer: 05015517.5
(22) Anmeldetag: 18.07.2005
(51) Int. Cl.: B29C 65/34, B29C 65/78, F16L 47/03

(54) **Elektroschweissmuffe**
Electrofusion fitting
Manchon d'électrosoudage

(43) Veröffentlichungstag der Anmeldung: 24.01.2007
(73) Patentinhaber: Georg Fischer Wavin AG, 8200 Schaffhausen (CH)
(72) Erfinder: Hess, Patrick, 78247 Weiterdingen (DE); Gressmann, Michael, 8222 Beringen (CH); Pylarski, Dirk, 78224 Singen (DE); Lehmann, Ernesto, 8200 Schaffhausen (CH)
(74) Vertreter: De Colle, Piergiacomo

(56) Entgegenhaltungen:
- DE-A1- 3 808 229
- DE-B1- 2 719 320
- DE-C1- 19 757 314
- DE-U1- 29 619 861
- FR-A- 1 141 157
- US-A- 4 629 216
- US-A- 4 770 442
- US-A- 5 252 810
- US-A- 5 687 996
- PATENT ABSTRACTS OF JAPAN Bd. 1998, Nr. 03, 27. Februar 1998 (1998-02-27) -& JP 09 303662 A (KUBOTA CORP), 28. November 1997 (1997-11-28)
- PATENT ABSTRACTS OF JAPAN Bd. 1996, Nr. 07, 31. Juli 1996 (1996-07-31) -& JP 08 080569 A (MITSUI PETROCHEM IND LTD), 26. März 1996 (1996-03-26)
- PATENT ABSTRACTS OF JAPAN Bd. 015, Nr. 457 (M-1181), 20. November 1991 (1991-11-20) -& JP 03 194295 A (SEKISUI CHEM CO LTD), 23. August 1991 (1991-08-23)
- PATENT ABSTRACTS OF JAPAN Bd. 015, Nr. 457 (M-1181), 20. November 1991 (1991-11-20) -& JP 03 194293 A (SEKISUI CHEM CO LTD), 23. August 1991 (1991-08-23)
- PATENT ABSTRACTS OF JAPAN Bd. 015, Nr. 457 (M-1181), 20. November 1991 (1991-11-20) -& JP 03 194292 A (SEKISUI CHEM CO LTD), 23. August 1991 (1991-08-23)

## Beschreibung

Die Erfindung bezieht sich auf eine Elektroschweissmuffe zum Verschweissen von Rohrleitungen aus thermoplastischen oder schweissbaren Kunststoffen umfassend mindestens einer Heizdrahtwicklung mit Kontakten zum Zuführen des elektrischen Stroms und mit einem am Aussenumfang der Schweissmuffe angeordneten Spannelement wobei das Spannelement abnehmbar und wieder verwendbar ausgebildet ist.

Im Rohrleitungsbau, insbesondere beim Bau von Rohrleitungsnetzen für die Gas- und Wasserversorgung, werden vermehrt druckfeste Rohrleitungen aus Kunststoff, beispielsweise Polyethylen, eingesetzt. Bei sehr grossen Leitungsquerschnitten wird die Wandstärke der Rohrleitungen und auch der dazupassenden Elektroschweissmuffen verhältnismässig gross. Eine einzelne Elektroschweissmuffe für eine Rohrleitung mit einem Nenndurchmesser von 500 mm kann ein Gewicht von mehr als 40 Kilo aufweisen. Die Rohrleitung selbst kann beim Transport und bei der Lagerung durch das grosse Eigengewicht unrund oder oval werden. Mit zunehmendem Durchmesser wird die Toleranz der Wandstärken von Schweissmuffe und Rohrleitung so gross, dass beim Zusammenfügen der Rohrleitung mit der Schweissmuffe ein Spalt von einigen Millimetern frei bleibt. Der grosse Durchmesser erfordert eine grosse elektrische Leistung, die nur bei einem guten Wärmeübergang und einem guten Kontakt zwischen der Muffeninnenseite und der Rohrleitungsaussenseite effizient eingebracht werden kann. Während des Schweissvorganges muss gewährleistet werden, dass die Innenseite der Muffe am gesamten Umfang eine ausreichend hohe radial wirkende Anpresskraft auf die Aussenseite der Rohrleitung ausübt.

Aus der DE 296 19 861 U1 ist eine Elektroschweissschweissmuffe für dünnwandige Kunststoffrohre bekannt. Die Muffe kann nach dem Einbringen des Rohrendes derart verspannt werden, dass eine gleichmässig auf das Rohrende wirkende radiale Kraft ausgeübt wird. Die Muffe weist stirnseitig einen Stutzen auf, der in axialer Richtung geschlitzt und zungenförmig ausgebildet ist. Mit einem Spannband, einem Spannring oder mit einer Ueberwurfmutter kann der geschlitzte Stutzen an die Aussenwand des Rohres angelegt werden. Hiermit wird erreicht, dass die Rohrenden während des Schweissvorganges in Bezug auf die Elektroschweissmuffe ausgerichtet und fixiert werden können. Die Herstellung einer geschlitzten Muffe und das Anbringen eines Spannringes machen diese Art der Rohrverbindung relativ aufwendig.

Aus der US 4770442 ist ein wieder verwendbares Armierungsrohr aus zwei metallenen Halbschalen bekannt, die von einem Verschlussstück zusammengehalten werden. Aus der FR 1141157 ist eine Schale bekannt, die während des Scheissvorganges zum Druckaufbau angewendet wird. Aus der JP 09303662 und der JP 08080569 sind weitere Klemmvorrichtungen zum Ausrichten und Festhalten der Rohrverbindung während des Schweissvorganges bekannt. Aus der US 5687996 und der US 5252810 sind ebenfalls Spannringe für eine Elektroschweissmuffe bekannt. Weitere Fixationsvorrichtungen für Elektroschweissmuffen sind bekannt aus JP 03194295, JP 03194293, JP 03194292, DE 19757314, DE 3808229 und DE 2719320. Aus der US 4629216 ist ein Verfahren und eine Vorrichtung zum Verbinden vorisolierten Rohrleitungen bekannt, wobei zwischen einem starren Ring und einem Streifen mit Heizwicklungen ein aufblasbarer Schlauch eingelegt wird.

Ausgehend von diesem Stand der Technik ist es Aufgabe der Erfindung, eine Elektroschweissmuffe anzugeben, die möglichst einfach herstellbar ist, die ein möglichst geringes Gewicht aufweist und die auch bei sehr grossen Rohrdurchmessern sicher und effizient verschweisst werden kann.

Diese Aufgabe wird dadurch gelöst , dass das Spannelement aus mindestens zwei durch Gurte mit einander verbindbar aufblasbare Kissen ausgebildet ist, wobei die Gurte zu einander parallel verlaufend angeordnet sind. Bevorzugte Weiterbildungen der Erfindung ergeben sich aus den abhängigen Ansprüchen.

Es ist von Vorteil, dass die Rohrleitungsverbindung möglichst wenig Gewicht aufweist. Dies wird dadurch erreicht, dass die Kaltzonen anschliessend an die Rippe einen zum Muffenende hin abnehmenden Aussendurchmesser aufweisen. Durch die besondere Dimensionierung der Rippe und des Muffenendes wird erreicht, dass die Kräfte, die beim Schmelzvorgang in der Schweisszone erzeugt werden, in das Muffenende eingeleitet werden. Das Muffenende wird radial an die Aussenwand der Rohrleitung angepresst.

Dies wird auch erreicht durch ein besonderes Verfahren zur Herstellung der Rohrleitungsverbindung. An der Elektroschweissmuffe werden keine zusätzlichen Teile wie beispielsweise Rohrschellen, Spannbänder oder Überwurfmuttern als Spannelement mit angeformt oder integriert. Das Spannelement ist wieder verwendbar und kann auch für andere Aufgaben eingesetzt werden.

Ein Ausführungsbeispiel der Erfindung wird anhand der Figuren beschrieben. Es zeigen:
Figur 1 einen Schnitt durch eine erfindungsgemässe Elektroschweissmuffe,
Figur 2 einen Schnitt durch einen Teilbereich der Elektroschweissmuffe von Figur 1,
Figur 3 eine perspektivische Sicht auf die Elektroschweissmuffe von Figur 1,
Figur 4 eine weitere perspektivische Sicht auf die Elektroschweissmuffe von Figur 1 und
Figur 5 eine perspektivische Sicht auf die Elektroschweissmuffe mit einer Tragöse.

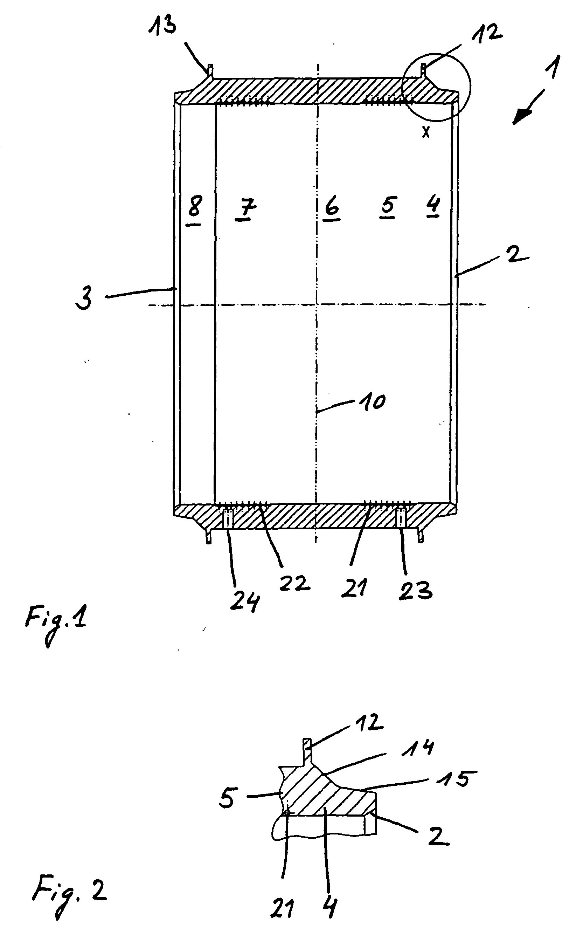

In den Figuren 1 und 2 ist eine Elektroschweissmuffe 1 für Kunststoffrohrleitungen geschnitten dargestellt. Die Elektroschweissmuffe 1 von Figur 1 wird eingesetzt zum Verbinden von Rohrleitungsabschnitten beim Bau von Netzen für die Gas- oder Wasserver- oder Entsorgung. Die Elektroschweissmuffe 1 von Figur 1 weist an beiden Muffenenden 2,3 den gleichen Innendurchmesser auf. Die Elektroschweissmuffe 1 ist als ein gerade verlaufender Rohrabschnitt ausgebildet, wobei die Achsen der zu verbindende Rohrleitungen zu einander fluchten.

Es sind jedoch auch Ausführungen denkbar bei der die Rohrleitungsachsen unter einem Winkel zu einander angeordnet sind und es sind auch Elektroschweissmuffen möglich, bei der die zwei Muffenenden 2, 3 unterschiedliche Innendurchmesser aufweisen. Für die Verzweigung von mehreren Rohrleitungen sind auch Y- oder T-förmige Elektroschweissformteile möglich.

Die Elektroschweissmuffe 1 weist, in axialer Richtung gesehen, zwischen dem ersten Muffenende 2 und dem zweiten Muffenende 3 verschiedene ringförmig ausgebildete Bereiche oder Zonen auf: eine erste äussere Kaltzone 4, eine erste Schweisszone 5, eine innere Kaltzone 6, eine zweite Schweisszone 7 und eine zweite äussere Kaltzone 8. Die innere Kaltzone 6 ist symmetrisch gegenüber der Mittellinie 10 der Elektroschweissmuffe 1 ausgebildet. Auf der Mittellinie 10 stossen die zu verbindenden Rohrleitungen, die hier nicht abgebildet sind, zusammen.

Auf der Mittellinie 10 kann auch auf der Innenseite der Muffe 1 ein Tiefenanschlag ausgebildet sein. Mit dem Tiefenanschlag wird erreicht, dass die erste und die zweite Rohrleitung auf möglichst einfache Art und Weise richtig und ausreichend tief in die Muffe 1 eingeschoben werden können.

Auf der Innenseite der Elektroschweissmuffe 1 sind auch die Heizdrahtwicklungen 21,22 ersichtlich, die über Kontakte 23,24 mit einer elektrischen Spannungsquelle verbunden werden können. Auf der Aussenseite der Elektroschweissmuffe 1 ist auch ein so genannter Schweissindikator ausgebildet. Der Schweissindikator besteht aus einem speziellen Stift aus Kunststoffmaterial in einer Führung und zeigt nach Aussen das Fortschreiten des Schmelzvorganges im Inneren der Schweissmuffe an. Durch den Druckaufbau im Inneren der Elektroschweissmuffe wird der Indikatorstift nach aussen gedrückt.

Die Muffe 1 weist am Aussenumfang zwei Rippen 12, 13 auf. Die Rippen 12,13 sind auf der Aussenseite der Muffe 1 im Uebergangsbereich zwischen den Schweisszonen 5,7 und den äusseren Kaltzonen 4,8 der Schweissmuffe 1 ringförmig ausgebildet. Die Rippen 12,13 können am Aussenumfang durchgehend ringförmig oder wie ein Ring mit Unterbrüchen ausgebildet sein.

Figur 2 zeigt einen vergrösserten Ausschnitt aus dem ersten Muffenende 2. Hier ist ersichtlich, wie die Wandstärke der Elektroschweissmuffe 1 im Bereich der Kaltzone 4 zwischen der ersten Rippe 12 und dem ersten Muffenende 2 abnimmt. Die Kaltzone 4, die zwischen der Rippe 12 und dem Muffenende 2 liegt, besteht aus zwei Abschnitten 14,15 mit zum Muffenende hin abnehmender Wandstärke. Der Aussendurchmesser der Muffe 1 nimmt im zweiten Abschnitt 15, der näher beim Muffenende 2 als bei der Rippe 12 liegt, weniger ab als im ersten Abschnitt 14, der näher bei der Rippe 12 liegt. Der Innendurchmesser der Muffe bleibt in der gesamten Kaltzone 4 gleich. Wenn die Elektroschweissmuffe 1 aufgeheizt wird, nimmt das Volumen des schmelzenden Kunststoffs der Rohrleitung und der Muffe im Bereich der Schweisszone zu. Als Folge des zunehmenden Volumens nimmt der Druck auf die Kaltzonen 4,6,8 zu. Durch die besondere Dimensionierung der Rippen 12,13 und der äusseren Kaltzonen 4,8 werden die Kräfte, die auf den Rippen 12,13 in axialer Richtung wirken umgelenkt in eine Kraft, die in radialer Richtung wirkt. Die Kaltzone 4,8 wird radial nach Innen verformt und wird auf die Aussenwand des zu verschweissenden Rohrendes gepresst.

Die Umlenkung der Kraftlinien wird begünstigt durch die Verwendung aufblasbarer Kissens 16,17, die auf der Aussenseite der Elektroschweissmuffe 1 angelegt werden.

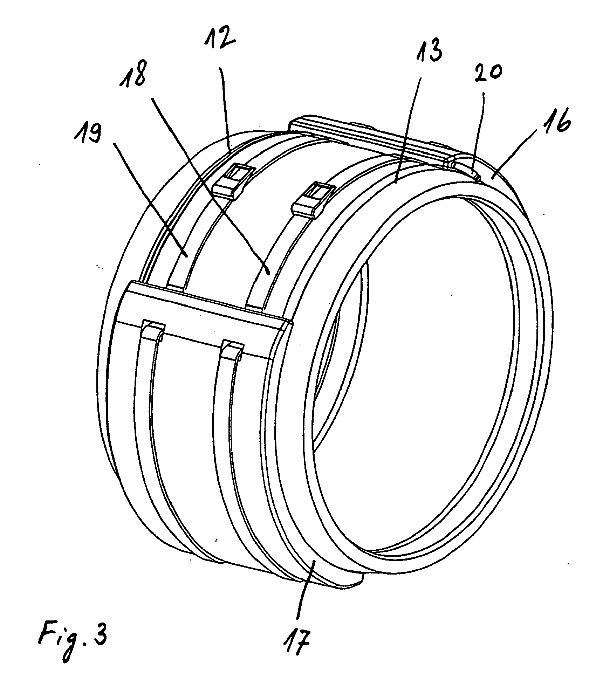

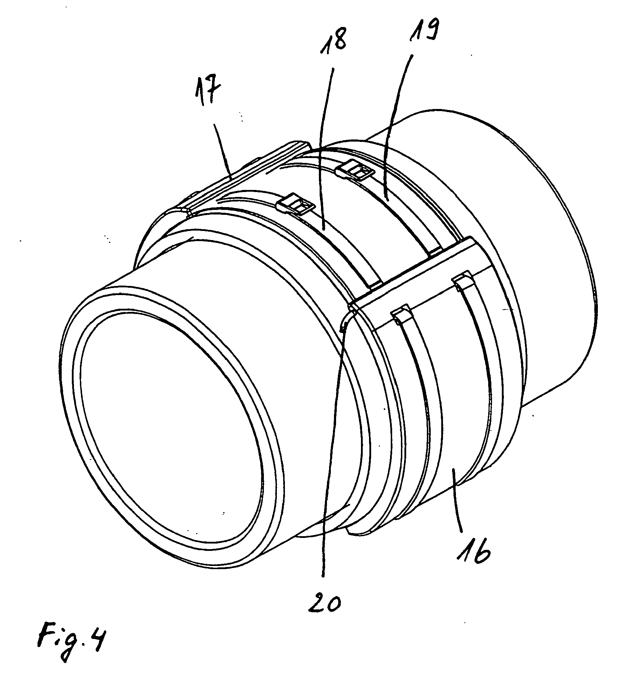

In den Figuren 3, 4 und 5 ist die Elektroschweissmuffe 1 perspektivisch dargestellt. Hier sind zwei Kissen 16,17 ersichtlich, die mit Spanngurten 18,19 mit einander verbunden sind. Die aufblasbaren Kissen 16, 17 können auch wesentlich weniger als den Gesamtumfang der Schweissmuffe umschliessen. Dies ist besonders vorteilhaft, wenn die Rohrleitung oder die Schweissmuffe nicht vollständig rund ist. Die Rohrleitung kann vor allem bei grösseren Durchmessern leicht unrund oder oval werden. Die aufblasbaren Kissen 16, 17 werden dann genau dort angelegt, wo der Durchmesser am Grössten ist. Es können auch mehr als zwei Kissen 16,17 mit Spanngurten 18,19 zu einem Spannelement verbunden werden. Es können sowohl in der Umfangsrichtung, das heisst an den Spanngurten hinter einander, als auch in der Achsrichtung, das heisst an neben einander liegenden Spanngurten, mehrere Kissen zu einem grösseren Spannelement, das die gesamte Länge und/oder den gesamten Aussenumfang der Elektroschweissmuffe überdeckt, verbunden werden.

An einem Kissen 17 ist eine Anschlussleitung 20 ersichtlich, die mit einem pneumatischen oder hydraulischen Druckerzeuger verbunden werden kann. Wenn die Kissen 16,17 an der Stelle mit dem grössten Durchmesser angelegt und aufgeblasen werden, wird die Muffe und die darunter liegende Rohrleitung zusammengepresst. Die Kreisform der Muffe und der Rohrleitung kann wieder hergestellt werden.

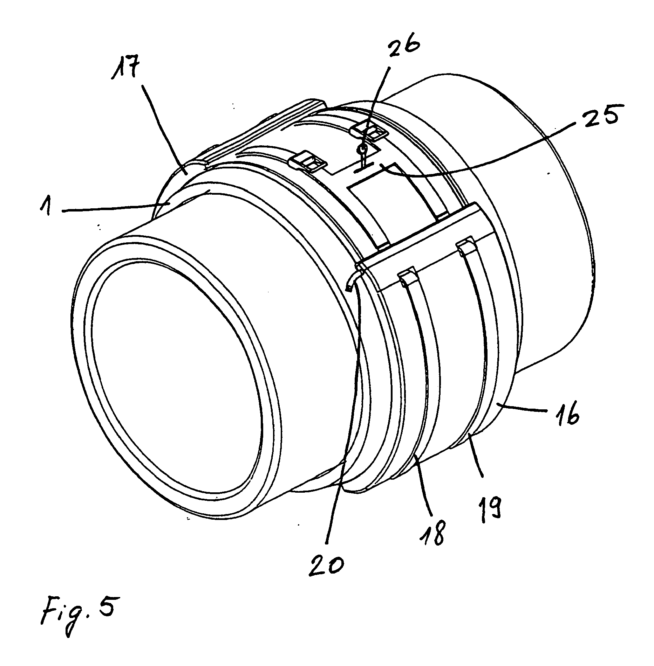

In Figur 5 ist ersichtlich, wie die Spanngurte 18,19 mit einem Steg 25, der in axialer Richtung verläuft, verbunden sind. An diesem Steg 25 kann eine Tragöse 26 ausgebildet sein. Mit der Tragöse 26 kann die Elektroschweissmuffe 1, die ein Gewicht von mehr als 40 Kg haben kann, von einem Hebegerät getragen oder angehoben werden. Bei der Verlegung von Versorgungsrohrleitungen mit Durchmessern von über 500 mm wird auf der Baustelle normalerweise mit einem Hebegerät gearbeitet.

Die Herstellung einer Rohrleitungsverbindung mit Elektroschweissmuffen läuft dann, vor allem bei grösseren Durchmessern, wie folgt ab: Das erste Rohrleitungsende, das verschweisst werden muss, wird mit Hilfe der aufblasbaren Kissen 16,17 an der Stelle mit dem grössten Durchmesser umklammert. Hierdurch wird die Kreisform des Rohres wieder hergestellt und das Rohrende lässt sich leichter in die Elektroschweissmuffe einführen. Anschliessend wird das Ende der zweiten Rohrleitung auf gleicher Art umklammert, rund gepresst und in die Elektroschweissmuffe eingeführt. Wenn beide Rohrleitungsenden in die Muffe eingeführt sind, werden die aufblasbaren Kissen am Umfang der Elektroschweissmuffe zwischen den Rippen 12,13 angelegt. Die aufblasbaren Kissen wirken temporär und wieder verwendbar als eine zusätzliche Armierung für die Elektroschweissmuffe.

Das Spannelement selbst kann auch mit nach Innen, das heisst zum Aussenumfang der Schweissmuffe hin, weisenden Rippen versehen sein. Diese Rippen sind am Rand der aufblasbaren Kissen 16,17 ausgebildet An der Aussenseite der Elektroschweissmuffe sind dann, anstelle der Rippen 12,13 Nuten ausgebildet, die die Rippen des Spannelementes passend aufnehmen.

Die Rohrleitungsverbindung mit der erfindungsgemässen Elektroscheissmuffe kann auch zuerst auf der Seite des ersten Rohrendes und anschliessend auf der Seite des zweiten Rohrendes hergestellt werden. Hierfür kann die Heizdrahtwicklung 21,22 in zwei separaten Stromkreisen für die zwei Schweisszonen an beiden Enden der Elektroschweissmuffe aufgeteilt werden. Bei einer zu kleinen Leistung des Schweissgerätes kann die Heizdrahtwicklung auch in mehr als zwei Stromkreisen mit jeweils mehr als zwei Kontakten 23,24 aufgeteilt werden. Die Heizdrahtwicklung 21,22 kann auch derart in Zonen aufgeteilt werden, dass mehrere Schweissgeräte gleichzeitig angeschlossen werden können. Die Schweisszonen selbst können auch aufgeteilt werden in kleineren Zonen mit unterschiedlichen Aufgaben. Entsprechend der Aufgabe jeder Zone können dann jeweils Spannelemente mit unterschiedlicher Spannwirkung und unterschiedlichem Kräfteeintrag in die Schweissverbindung angelegt werden.

Dank der temporären zusätzlichen Armierung mit dem abnehmbaren und wieder verwendbaren Spannelement kann die Elektroschweissmuffe 1 selbst mit einem geringeren Gewicht ausgelegt werden. Das Spannelement kann bei unterschiedlichen Umgebungstemperaturen eingesetzt werden. Beim Schweissvorgang dienen die aufblasbaren Kissen 16,17 als Widerlager für den Druck, der durch den Schmelzvorgang in den Schweisszonen 5,7 erzeugt wird. Das temporäre Spannelement kann auch mit einem Verstärkungsring aus thermoplastischem Material, der mit dem Aussenumfang des Muffenkörpers kraftschlüssig verbunden ist, gemäss der DE 4203626 A1 kombiniert werden.

Durch die kraftschlüssige Anordnung des Spannelementes am Aussenumfang des Muffenkörpers entsteht beim Schweissen ein nach innen gerichteter Druck, welcher auf das geschmolzene Material wirkt und so den für eine gute Schweissverbindung erforderlichen Schweissdruck erzeugt. Durch die besondere Formgebung der Rippen 12,13 und der äusseren Kaltzonen 4,8 wird erreicht, dass die Kräfte von der Schweisszone in die Kaltzonen 4,8 abgeleitet werden.

Insgesamt wird eine Elektroschweissmuffe angeboten, die bei möglichst kleinem Gewicht eine möglichst gute Verschweissung von Rohrleitungen mit sehr grossen Nenndurchmessern, auch bei unrunden Rohrleitungen ermöglicht.

## Patentansprüche

1. Elektroschweissmuffe (1) zum Verschweissen von Rohrleitungen aus thermoplastischen oder schweissbaren Kunststoffen umfassend mindestens einer Heizdrahtwicklung (21,22) mit Kontakten (23,24) zum Zuführen des elektrischen Stroms und mit einem am Aussenumfang der Schweissmuffe (1) angeordneten Spannelement (16,17,18,19), wobei das Spannelement (16,17,18,19) abnehmbar und wieder verwendbar ausgebildet ist, **dadurch gekennzeichnet, dass** das Spannelement (16, 17, 18, 19) aus mindestens zwei durch Gurte (18,19) mit einander verbindbaren aufblasbaren Kissen (16,17) ausgebildet ist, wobei die Gurte (18,19) zu einander parallel verlaufend angeordnet sind.

2. Elektroschweissmuffe nach dem Anspruch 1, **dadurch gekennzeichnet, dass** das Muffenende (2,3) am Aussenumfang der Muffe (1) eine ringförmig ausgebildete Rippe (12,13) aufweist.

3. Elektroschweissmuffe nach mindestens einem der Ansprüche 1 oder 2, **dadurch gekennzeichnet, dass** die Rippe (12,13) im Uebergangsbereich zwischen der Schweisszone (5,7) und der äusseren Kaltzone (4,8) der Schweissmuffe (1) ausgebildet ist.

4. Elektroschweissmuffe nach mindestens einem der Ansprüche 1 bis 3, **dadurch gekennzeichnet, dass** zwischen den Rippen (12,13) im Bereich der Schweisszone (5,7) ein Spannelement einbringbar ist.

5. Elektroschweissmuffe nach mindestens einem der Ansprüche 1 bis 4, **dadurch gekennzeichnet, dass** die aufblasbare Kissen (16,17) den Aussenumfang der Schweisszone (5,7) vollständig oder teilweise umschliessend angeordnet sind.

6. Elektroschweissmuffe nach mindestens einem der Ansprüche 1 bis 5, **dadurch gekennzeichnet, dass** zwischen den Gurten (18,19) ein in axialer Richtung verlaufender Steg (25) mit einer Tragöse (26) ausgebildet ist.

7. Elektroschweissmuffe nach mindestens einem der Ansprüche 1 bis 6, **dadurch gekennzeichnet, dass** die Kaltzone (4,8) anschliessend an die Rippe (12,13) einen zum Muffenende hin abnehmenden Aussendurchmesser aufweist.

8. Elektroschweissmuffe nach mindestens einem der Ansprüche 1 bis 7, **dadurch gekennzeichnet, dass** die Kaltzone (4,8) mindestens zwei Abschnitten (14,15) mit unterschiedlich abnehmenden Aussendurchmessern aufweist.

9. Elektroschweissmuffe nach mindestens einem der Ansprüche 1 bis 8, **dadurch gekennzeichnet, dass** der erste der Rippe (12,13) anschliessenden Abschnitt (14) den am stärksten abnehmenden Aussendurchmesser aufweist.

## Claims

1. Electric welding sleeve (1) for welding pipelines made of thermoplastic or weldable plastics comprising at least one heating wire winding (21, 22) with contacts (23, 24) for supplying the electric current and with a tensioning element (16, 17, 18, 19) arranged on the external circumference of the welding sleeve (1), the tensioning element (16, 17, 18, 19) being formed in a manner such that it can be removed and reused, **characterized in that** the tensioning element (16, 17, 18, 19) is formed from at least two inflatable cushions (16, 17) that can be connected to one another by straps (18, 19), the straps (18, 19) being arranged in a manner running parallel to one another.

2. Electric welding sleeve according to Claim 1, **characterized in that** the sleeve end (2, 3), on the external circumference of the sleeve (1), has a rib (12, 13) formed in annular fashion.

3. Electric welding sleeve according to at least one of Claims 1 or 2, **characterized in that** the rib (12, 13) is arranged in the transition region between the welding zone (5, 7) and the outer cold zone (4, 8) of the welding sleeve (1).

4. Electric welding sleeve according to at least one of Claims 1 to 3, **characterized in that** a tensioning element can be introduced between the ribs (12, 13) in the region of the welding zone (5, 7).

5. Electric welding sleeve according to at least one of Claims 1 to 4, **characterized in that** the inflatable cushions (16, 17) are arranged in a manner completely or partially enclosing the external circumference of the welding zone (5, 7).

6. Electric welding sleeve according to at least one of Claims 1 to 5, **characterized in that** a web (25) running in the axial direction with a carrying lug (26) is formed between the straps (18, 19).

7. Electric welding sleeve according to at least one of Claims 1 to 6, **characterized in that** the cold zone (4, 8), adjacent to the rib (12, 13), has an external diameter that decreases towards the sleeve end.

8. Electric welding sleeve according to at least one of Claims 1 to 7, **characterized in that** the cold zone (4, 8) has at least two sections (14, 15) having external diameters that decrease differently.

9. Electric welding sleeve according to at least one of Claims 1 to 8, **characterized in that** the first section (14) adjacent to the rib (12, 13) has the external diameter that decreases to the greatest extent.

## Revendications

1. Manche d'électrosoudage (1) permettant de souder des conduits tubulaires en matières synthétiques et thermoplastiques ou soudables,
le manchon présentant au moins un enroulement (21, 22) de fils chauffants doté de contacts (23, 24) qui permettent d'amener le courant électrique et un élément de serrage (16, 17, 18, 19) disposé à la périphérie extérieure du manchon de soudage (1),
l'élément de serrage (16, 17, 18, 19) étant amovible et pouvant être réutilisé,
**caractérisé en ce que**
l'élément de serrage (16, 17, 18, 19) est formé d'au moins deux coussins gonflables (16, 17) qui peuvent être reliés l'un à l'autre par des courroies (18, 19) et
**en ce que** les courroies (18, 19) sont disposées parallèlement l'une à l'autre.

2. Manche d'électrosoudage selon la revendication 1, **caractérisé en ce qu'**à la périphérie extérieure du manchon (1), l'extrémité (2, 3) du manchon présente une nervure (12, 13) de forme annulaire.

3. Manche d'électrosoudage selon au moins l'une des revendications 1 ou 2, **caractérisé en ce que** la nervure (12, 13) est formée au niveau de la transition entre la zone de soudage (5, 7) et la zone froide extérieure (4, 8) du manchon de soudage (1).

4. Manche d'électrosoudage selon au moins l'une des revendications 1 à 3, **caractérisé en ce qu'**un élément de serrage peut être placé entre les nervures (12, 13) au niveau de la zone de soudage (5, 7).

5. Manche d'électrosoudage selon au moins l'une des revendications 1 à 4, **caractérisé en ce que** les coussins gonflables (16, 17) sont disposés de manière à entourer complètement ou partiellement la périphérie extérieure de la zone de soudage (5, 7).

6. Manche d'électrosoudage selon au moins l'une des revendications 1 à 5, **caractérisé en ce qu'**une nervure (25) s'étendant dans la direction axiale et dotée d'un oeillet de support (26) est formée entre les courroies (18, 19).

7. Manche d'électrosoudage selon au moins l'une des revendications 1 à 6, **caractérisé en ce qu'**en position adjacente à la nervure (12, 13), la zone froide (4, 8) présente un diamètre qui diminue en direction de l'extrémité du manchon.

8. Manche d'électrosoudage selon au moins l'une des revendications 1 à 7, **caractérisé en ce que** la zone froide (4, 8) présente au moins deux parties (14, 15) dont les diamètres extérieurs décroissent de manière différente.

9. Manche d'électrosoudage selon au moins l'une des revendications 1 à 8, **caractérisé en ce que** la première partie (14) adjacente à la nervure (12, 13) présente le diamètre extérieur qui décroît le plus fort.
